# EUROPEAN PATENT APPLICATION

(11) **EP 1 553 068 A1**
(43) Date of publication of application: **13.07.2005**
(21) Application number: 04000401.2
(22) Date of filing: 10.01.2004
(51) Int. Cl.: C04B 41/85, C23C 20/06

(54) **Inorganic coating for ceramic ware**

(71) Applicant: Nanogate Coating Systems GmbH, 66121 Saarbrücken (DE)
(72) Inventor: Jonschker, Gerhard, Dr., 66583 Spiesen-Elversberg (DE); Krakehl, Joachim, Dr., 66117 Saarbrücken (DE); Hanisch, Michael, 66583 Spiesen-Elversberg (DE)
(74) Representative: Jönsson, Hans-Peter, Dr.

(57) **Abstract**

This invention is related to an inorganic coating composition comprising porous oxide particles or powders which forms an inorganic coating through a sintering process and leads to a closed surface and a durable connection with the subsurface, a process for the preparation of an inorganic coating, and a ceramic ware body with an inorganic coating.

## Description

This invention is related to an inorganic coating composition, an inorganic coating on a ceramic ware body and a process for preparation of an inorganic coating.

The main purpose of traditional glazes is to cover a ceramic ware body to protect it against the influence of water, dirt and gases that means protecting it against physical or chemical attacks. They should have a pleasing appearance by a uniform, smooth and glossy surface with as few as possible defects like pores or particles. Additional properties can be colour, antibacterial effect and/or hydrophilicity.

Traditional inorganic glazes can be made by mixtures of raw minerals, by frits or by mixtures thereof. Frits based on vitreous melts are quenched in water and subsequently ground.

The characteristics of the glazes can be adapted by varying the chemical composition and different physical factors, like grain size and sintering temperature, to fulfil the above mentioned desired properties.
The composition and the degree of grinding determines the temperature, at which the glaze provides a smooth coating free of pores. This technology however has several drawbacks, especially when a combination of properties like chemical resistance and smoothness of the surface is desired.
With conventional methods, grinding of the raw material and/or frits is economically feasible only for average particle diameters of approximately 10 µm to 20 µm. When trying to obtain a finer grind, efforts and price are rising exponentially and the result is not satisfactory, since sieving of larger residual particles is necessary. Therefore typically, the main components of traditional raw glazes exhibit N₂-BET surface areas of much less then 20 m²/g (kaolin, quartz sand, albite, potash feldspar, calcspar, dolomite, ...).

It is known that milling the traditional glazes to finer particle sizes improves the sintering behaviour, but this process is highly limited due to the time and cost consuming process, which is required.

In particular the chemical composition of the glaze determines the chemical resistance. At high temperature melting glass-building components often show a good chemical resistance. But they are not suitable in conventional industrial firing processes in a furnace or a kiln where the furnace material and/or the substrate does not permit such a high temperature. High temperatures also lead to high costs so that this is far too high for a feasible process.

When trying to produce particularly low melting glazings, the dilemma is that the components that are lowering the melting point of the glazing, commonly called fluxes, (e.g. alkaline, lead, boron-compounds) are at the same time degrading the chemical resistance. This constricts the possible fields of application of the glazed substrate so that a commercial application for ceramics or metals often is not feasible.

Using frits with an optimized distribution pattern of the different chemical compounds can be obtained and lead to a better sintering behaviour. These frits are obtained by completely melting the mainly mineral compounds at high temperatures and quenching and milling the resulting material.

Frits also show disadvantages because they soften glass-like very slowly and need high temperatures to homogenize to a smooth and pore-free glaze with sufficient chemical resistance. Very thin coatings < 50 µm thickness are difficult to obtain and are limited because of the grain size, too. In addition to this the complex energy, time and money consuming production process for frits based on vitreous melts at high temperatures rises the costs as well as the subsequent milling process.

Because of the different limiting factors the obtained glaze can always only be a compromise between all desired properties.

A variety of glazings has been taught in the prior art for the purpose to provide glossy and/or hydrophilic glazings on sanitary ware or other ceramic articles.

US 6,548,162 B1 teaches a sanitary ware body and a surface glaze layer, which is hydrophilic and exhibits an average surface roughness of less than 0.07 µm.

The product KeraTect® of Keramag teaches a hydrophilic coating with low surface roughness.

JP 2002/080830 A teaches a hydrophilic film with a surface roughness as determined by atomic force microscopy to be from 5 to 35 nm.

JP 2000/211983 A teaches a hydrophilic glazing layer based on most likely porous alumina.

The problem of the present invention is to provide an inorganic coating layer that can be coated as thin as possible onto an article, that exhibits as little surface roughness as possible, that exhibits as much gloss as possible, is chemically inert, and can be integrated in standard industrial firing processes whereby additional properties can be integrated like for example hydrophilicity, antibacterial properties and/or colour.

The inorganic coating composition according to the present invention is not a frit or a raw mineral glaze or a mixture of both as it is usually used for glazing.

In a first embodiment of the invention, the problem of the present invention is solved by an inorganic coating composition, characterized in that it comprises an aqueous suspension of metal oxide particles having a N₂-BET surface area of at least 25 m²/g.

For the purpose of the present invention, the term "aqueous suspension" also includes water based suspensions that may comprise other solvents up to 40 % by weight. The term "metal oxide" also includes silicon dioxide (SiO₂), boron dioxide (B₂O₃) and/or phosphorous oxide (P₂O₅). The term "ceramic" also includes sanitary ware, tiles, china, enamel, dishes or porcelain.

It is preferred that said metal oxide particles comprise at least 50% by weight, and in particular at least 75%, particles being prepared by condensation processes for example precipitation, sol gel, or flame pyrolisis, which leads to a very homogenous distribution of the chemical components in the highly porous particles or powders. These highly porous and small components show excellent sintering properties because of their large N₂-BET surface area and lead to very smooth and chemical resistant coatings even at temperatures used in standard industrial firing processes for example in a sanitary ware manufacturing process. Even no additional processes for preparing a frit nor additional milling processes are needed to prepare the coating material. The N₂-BET surface area is determined in analogy to DIN 66131.

On the other hand it is possible that only the main part of the metal oxide components is prepared by condensation processes and fluxes are added for adjusting the melting temperature and/or smoothness of the resuiting inorganic coating. Preferably, these fluxes are soluble in the aqueous solution and are able to wet or penetrate the solid, porous particles already in the aqueous solution and intercalate into the swollen gel layer. This has a positive influence and accelerates the sintering process too, because the interaction of glass building particles and flux not only begins when the fluxes start to melt.

Preferably, said inorganic coating composition may also contain a flux for adjusting the melting temperature and/or smoothness of the resulting inorganic coating.

This inorganic coating composition according to the present invention is not a frit as it is usually used for glazing. Usual frits are obtained by melting the raw material ingredients and then quenching the melt with water to obtain a glass frit which is subsequently ground. For obtaining a frit, the first heating step requires a higher temperature for the melting of the raw materials in an acceptable range of time than for the following steps for melting the frit. For forming chemically very stable coatings through pure frits, high melting frits are needed, which require even higher temperatures for the melting of the raw materials. For instance, for a frit, which melts at 1300°C in a realistic period of time (<24h), the temperature needed for the raw material lies much higher at about e.g. 1500°C. Such a high melting temperature for raw material glazes however is incompatible with the standard firing temperatures in the area of sanitary ware being in the range of 1100 to 1300°C. Using the composition as such described in this invention however results in a lower melting point being compatible with standard co-firing procedures in the sanitary ware manufacturing process.

In the present invention, the composition of the original ingredients as described in this invention is directly applied to the ceramic ware, in particular sanitary ware articles, and fired in a kiln to yield the final glazed ceramic ware article with an inorganic coating layer.

Preferably, said metal oxide particles have an average diameter of up to 10 µm and a N₂-BET surface area of at least 25 m²/g, in particular at least 50 m²/g, most particular at least 80 m²/g. Thus, when the kiln reaches temperatures of above 1100 °C, the molten flux will be adsorbed to the high surface area of the metal oxide particles. The small porous particles or powders are dissolved in the molten flux or mixture of fluxes and start to melt. This leads to a thin, smooth surface.

It is particularly desirable for said metal oxide particles to consist of at least 90% by weight of oxides of metals selected from the group Al, Si, alkaline metals and/or alkaline earth metals and/or elements selected from the group titanium, zirconium, zinc, tin, boron and/or phosphor. Especially desirable such said metal oxide particles, comprising
a) 2 % to 90 % by weight of SiO₂,
b) optionally, 0.2 % to 30 % by weight of Al₂O₃, and
c) 0.2 % to 25 % by weight of alkaline oxide.

The use of fluxes is known in the ceramic industry as additive for ceramic materials making easier the melt of said materials. The flux may be selected from the group of oxides such as Li₂O, Na₂O, K₂O, B₂O₃, PbO, or P₂O₅, MgO, CaO, ZnO, BaO, SrO, FeO, MnO, CuO, CoO, NiO. For the purpose of the present invention, the different mentioned oxides can also be added as different salt or hydroxide compositions which lead to the mentioned oxides after the firing process. Preferably the flux is Na₂O.

Said flux is preferably selected, such that it comprises
a) 0.5 % to 25 % by weight of Li₂O, and/or
b) 0.5 % to 50 % by weight of B₂O₃, and/or
c) 0.5 % to 25 % by weight of Na₂O, and
d) optionally, 0.5% to 25% by weight of a compound selected from the group of PbO, P₂O₅, and/or B₂O₃.

Preferably, said inorganic coating composition comprises 30 % to 90 % by weight of water.

In a preferred embodiment of the invention, said inorganic coating composition optionally comprises additives selected from the group of thickeners, wetting agents, scents, preservatives, dyes, frits, minerals, metals or metal oxides with an antibacterial property, pigments, solvents, and/or anti-foaming agents.

The thickener solution may comprise water and one or more commonly used thickeners such as Optapix® or Peptapon®. The wetting agent may be one or more of commonly used wetting agents such as Sapetin®.

The use of metals or metal oxides with an antibacterial property acting during the use of said ceramic ware is of particular advantage for sanitary applications in public sanitary facilities.

Preferentially, said composition exhibits a firing temperature in the range of 1100°C to 1500°C.

In a second embodiment of the invention, the problem of the present invention is solved by an inorganic coating layer on the surface of a ceramic ware, characterized in that its
a) surface roughness as determined by atomic force microscopy is up to 100 nm,
b) thickness is up to 100 µm,
c) contact angle against water in air is up to 50°.

Preferably said surface roughness is up to 50 nm, most preferably up to 20 nm. Preferably said thickness is up to 50 µm, most preferably up to 20 µm. The smoother the surface of the ceramic ware body is, the easier it is to clean. The smoothness of the surface together with proper selection of highly refractive materials yields in surfaces exhibiting high gloss.

Preferably, the inorganic coating exhibits a contact angle against water in air is up to 10°. The lower the contact angle is, the better is the resulting hydrophilicity, which results in easier maintenance of the ceramic ware.

Preferably, said ceramic ware is a glazed and fired sanitary ware body.

For economical reasons and to maximize the glazed surface area per volume unit of inorganic coating composition, the thickness of the inorganic coating is preferably up to 50 µm, in particular up to 20 µm.

Preferably, said inorganic coating is a glass-like coating.

Preferably, the inorganic coating of the present invention may be applied not only directly on the ceramic ware body but on a basic glaze provided on said ceramic ware body.

In a third embodiment of the invention, the problem of the present invention is solved by a process for the preparation of an inorganic coating, comprising the steps in the following sequence
a) applying a composition as defined above to a surface forming a precursor layer, and
b) firing said surface and the inorganic coating at a temperature in the range of 1100°C to 1500°C.

Said surface is preferentially selected from the group of an already glazed surface with a standard glaze material before firing, or an already standard glazed and fired surface, or a surface of a raw ceramic ware body before firing, or a surface of an already fired ceramic ware body, or a metal surface.

Said precursor layer is the layer of raw materials forming the glass-like coating upon firing.

For the aforementioned reasons, the process most preferably results in an inorganic coating that exhibits a contact angle against water up to 50°, a surface roughness as determined by atomic force microscopy up to 50 nm, in particular up to 20 nm, and a thickness up to 20 µm.

The invention, furthermore encompasses a ceramic ware body with an inorganic coating as described above. Typical applications may be tiles, china, enamel, dishes or porcelain.

It should be understood that this specification does not preclude chemical interactions among the components listed, but instead describes the component of the composition according to the invention in the form in which there generally used is ingredients to prepare such a composition.

### Examples:

### General Procedures:

Resistance to cracking of the glazing was tested by applying a solution of methylene blue for staining existing cracks, removing excess methylene blue solution with dry pulp, visual examination for cracks in the glazing.

Visual appearance was determined by the human eye. Key criteria include gloss/lustre, detection of cracks as described above, detection of other artifacts such as craters, pimples, pits, and roughness.

Hydrophilicity was evaluated by contact angle measurement against demineralized water in air. Unless otherwise stated, said contact angle is determined by dynamic advancing contact angle measurements using a Krüss® instrument.

Roughness of the glazing was tested by Atomic Force Microscopy (AFM) measurements using a SMENA-A Complete Standalone System by NT-MDT.

Thickness of the glazing was measured by Scanning Electron Microscopy (SEM) using a Philips XL 20 machine equipped with a Tracer-Northern EDS system.

Following trade names and abbreviations shall be introduced as follows (all percentages by weight):

| | |
|---|---|
| Sipernat® 820 A | by Degussa (82 % SiO₂/9.5 % Al₂O₃/8 Na₂O/traces of Fe₂O₃ and SO₃) |
| Optapix® C50 G | thickener by Zschimmer & Schwarz GmbH & Co. KG Chemische Fabriken |
| Optapix® KG 6 | thickener by Zschimmer & Schwarz GmbH & Co. KG Chemische Fabriken |
| Peptapon® 205 | thickener by Zschimmer & Schwarz GmbH & Co. KG Chemische Fabriken |
| Sapetin® N | wetting agent by Woellner Silikat GmbH containing mainly alkyloligosaccharides |

### Example 1:

To 644 g of water were added in the order of mention 32 g Na₂B₄O₇*10H₂O, 5,8 g NaOH, 6,94 g LiOH*H₂O, and 144 g of a precipitated silica (Degussa Sipernat® 820 A) under stirring and heating to about 40 °C. To this solution was added a thickener solution consisting of 2.8 g of Optapix® C50 G, 2.8 g Optapix® KG 6, 0.6 g of Peptapon® 205, and 160 g of water. After addition of 0.7 g of Sapetin® N, the solution was stirred vigorously and placed into an ultrasound bath for 1 h.

At room temperature, a fired urinal was coated using spray coating with parameters including 2.5 bar pressure and 40 cm distance from nozzle to substrate. It should be mentioned that any already glazed and fired sanitary ware ceramic would suffice in this particular example. The equipment for spray coating was a SATAjet® 90 system. Firing conditions include heating the kiln to 1250° C, keeping the temperature at this level for 90 minutes and slowly cooling the kiln to room temperature.

The resulting glazing exhibited a contact angle with water of < 50°, no cracking or other artifacts as determined by visual inspection, a thickness of the glazing of 15 µm, and a roughness of the glazing of less than 10 nm.

## Claims

1. An inorganic coating composition, **characterized in that** it comprises an aqueous suspension of metal oxide particles having a N₂-BET surface area of at least 25 m²/g.

2. The inorganic coating composition according to claim 1, **characterized in that** said metal oxide particles comprise at least 50% by weight, and in particular at least 75%, of particles being prepared by condensation processes for example precipitation, sol gel, or flame pyrolisis.

3. The inorganic coating composition according to claim 1, **characterized in that** it comprises a flux or a mixture of fluxes.

4. The inorganic coating composition according to claim 1, **characterized in that** said metal oxide particles have an average diameter of up to 10 µm.

5. The inorganic coating composition according to claim 1, **characterized in that** said N₂-BET surface area is at least 50 m²/g, in particular at least 80 m²/g.

6. The inorganic coating composition according to claim 1, **characterized in that** said metal oxide particles consist of at least 90% by weight of oxides of metals selected from the group Al, Si, alkaline metals and/or alkaline earth and/or elements selected from the group of titanium, zirconium, zinc, tin, boron and/or phosphor.

7. The inorganic coating composition according to claim 1, **characterized in that** said metal oxide particles comprise
a) 2 % to 90 % by weight of SiO₂,
b) optionally, 0.2 % to 30 % by weight of Al₂O₃, and
c) 0.2 % to 25 % by weight of alkaline oxide.

8. The inorganic coating composition according to claim 3, **characterized in that** said flux comprises
a) 0.5 % to 25 % by weight of LiO₂, and/or
b) 0.5 % to 50 % by weight of B₂O₃, and/or
c) 0.5 % to 25 % by weight of Na₂O, and/or
d) optionally, 0.5% to 25% by weight of a compound selected from the group of PbO, P₂O₅, and/or B₂O₃.

9. The inorganic coating composition according to claim 1, **characterized in that** it comprises 30 % to 90 % by weight of water.

10. The inorganic coating composition according to claim 1, **characterized in that** it comprises, additives selected from the group of thickeners, wetting agents, scents, preservatives, dyes, frits, minerals, and metals or metal oxides with an antibacterial property, pigments, solvents, and anti-foaming agents.

11. The inorganic coating composition according to claim 1, **characterized in that** it exhibits a firing temperature in the range of 1100°C to 1500°C.

12. An inorganic coating layer on the surface of a ceramic ware, **characterized in that** its
a) surface roughness as determined by atomic force microscopy is up to 100 nm,
b) thickness is up to 100 µm, and
c) contact angle against water in air is up to 50°.

13. The inorganic coating according to claim 12, having a contact angle against water in air up to up to 10°.

14. The inorganic coating according to claim 12, having a surface roughness as determined by atomic force microscopy up to 50 nm, in particular up to 20 nm.

15. The inorganic coating according to claim 12, having a thickness of the coating up to 50 µm, in particular up to 20 µm.

16. A process for the preparation of an inorganic coating on the surface of a ceramic ware body, comprising the steps in the following sequence
a) applying a composition according to anyone of claims 1 to 11 to a surface forming a precursor layer, and
b) firing said surface and the inorganic coating at a temperature in the range of 1100°C to 1500°C.

17. The process according to claim 16, **characterized in that** said surface is selected from the group of an already glazed surface with a standard glaze material before firing, or an already standard glazed and fired surface, or a surface of a raw ceramic ware body before firing, or a surface of an already fired ceramic ware body, or a metal surface.
